# EUROPÄISCHE PATENTSCHRIFT

(11) **EP 0 538 567 B1**
(45) Veröffentlichungstag und Bekanntmachung des Hinweises auf die Patenterteilung: **19.07.1995**
(21) Anmeldenummer: 92113364.1
(22) Anmeldetag: 05.08.1992
(51) Int. Cl.: F16L 5/02, H02G 3/22, A62C 2/06

(54) **Vorrichtung zur Brandabschottung einer Wandöffnung für die Durchführung von Leitungen durch eine Wand**
Fire barrier device through a wall opening for the penetration of conduits
Dispositif coupe-feu placé dans l'ouverture d'une paroi pour la traversée de conduits

(30) Priorität: 23.10.1991 DE 4134915
(43) Veröffentlichungstag der Anmeldung: 28.04.1993
(73) Patentinhaber: Hauff, Werner, D-89561 Dischingen (DE)
(72) Erfinder: Hauff, Werner, D-89561 Dischingen (DE)
(74) Vertreter: Fay, Hermann, Dipl.-Phys. Dr.

(56) Entgegenhaltungen:
- WO-A-82/03951
- DE-A- 2 737 978
- DE-U- 9 011 952
- NL-A- 8 302 140

## Beschreibung

Die Erfindung betrifft eine Vorrichtung zur Brandabschottung einer Wandöffnung für die Durchführung von Leitungen, wie elektrische Kabel, Rohre oder dergl., durch eine Wand, mit einem abgedichtet gegen die Wand in der Wandöffnung angeordneten, die Leitungen in einer Durchführungsöffnung aufnehmenden Schottkasten, der auf beiden Seiten der Wandöffnung je eine feststehende, die Durchführungsöffnung freilassende Stirnwand aufweist und zwischen diesen Stirnwänden eine zur Durchführungsöffnung hin offene Aufnahme für ein Behältnis bildet, das ein Brandschutzmittel enthält, das im Brandfall infolge der Wärmeeinwirkung sein Volumen vergrößert und dadurch die Durchführungsöffnung ausfüllt und verschließt.

Eine Vorrichtung dieser Art ist aus DE-U-90 11 952 bekannt. Dabei ist die Stirnwand von einem thermoplastischen Dichtstoff gebildet, der an der Leitung anliegt und dadurch die Durchführungsöffnung abdichtet, um Rauchgasdichtigkeit bei einem Schwelbrand zu gewährleisten. Die Durchführungsöffnung ist daher immer geschlossen und eine Änderung oder Ergänzung ihrer Belegung mit Leitungen nur umständlich und mit aufwendigen Arbeiten möglich.

Weiter ist eine Vorrichtung der eingangs genannten Art in der zum Stand der Technik gemäß Art. 54.3 EPÜ gehörenden EP-A-0 532 887 beschrieben. Dabei ist das Behältnis beweglich und erst im Brandfall in die Durchführungsöffnung hinein verstellbar. Es besteht aus einem in der Aufnahme verschiebbar geführten starren Kasten, der als Brandschutzmittel ein Intumeszenzmaterial enthält. Im Brandfall wird zunächst der Kasten aus der Aufnahme in die Durchführungsöffnung verschoben, ehe das Intumeszenzmaterial sich aufbläht und die Durchführungsöffnung verschließt. Auch im vollständig in die Durchführungsöffnung vorgeschobenen Zustand überlappt sich der Kasten noch mit den Stirnwänden, wobei zwecks gegenseitiger Abdichtung im Überlappungsbereich zwischen dem Kasten und den Stirnwänden einerseits befestigte und andererseits verschiebbar anliegende Matten aus elastisch verformbarem Dichtungsmaterial vorgesehen sind. Die mit solchen Dichtungsmatten verbundene Reibung kann die Verstellung des Kastens in die Durchführungsöffnung hinein erschweren, insbes. dann, wenn die Matten zur Abdichtung nicht nur zwischen dem Kasten und den Stirnwänden, sondern auch zwischen dem Kasten und den anderen, die Aufnahme und die Durchführungsöffnung begrenzenden Wänden vorgesehen sind.

Der Erfindung liegt die Aufgabe zugrunde, eine Vorrichtung der eingangs genannten Art so auszubilden, daß ein Verschluß der Durchführungsöffnung erst im Brandfall stattfindet. Gegenüber DE-U-90 11 952 besteht die Aufgabe darin, daß bei in die Durchführungsöffnung bewegtem Behältnis eine Abdichtung des Behältnisses gegen die die Aufnahme und die Durchführungsöffnung begrenzenden Wände erfolgt, ohne daß durch diese Abdichtung die Beweglichkeit des Behältnisses beeinträchtigt wird.

Die Erfindung besteht bei einer Vorrichtung mit den eingangs genannten Merkmalen darin, daß das Behältnis beweglich und in die Durchführungsöffnung hinein verstellbar ist und daß die Wandung des Behältnisses zumindest teilweise aus einem verformbaren Mantel besteht, der bei der Bewegung des Behältnisses aus der Aufnahme in die Durchführungsöffnung in Bewegungsrichtung und um den Verstellweg verlängerbar ist und sich unter der Wirkung eines im Behältnis entstehenden Innendrucks den die Aufnahme und die Durchführungsöffnung begrenzenden Wänden innenseitig anlegt.

Im Ergebnis bildet das Behältnis einen hohlen Blähkörper, dessen Mantel durch seine Verformbarkeit eine Aufblähung des Behältnisses bis zum Verschluß der Durchführungsöffnung und der Aufnahme ermöglicht. Dazu wird im Inneren des Behältnisses ein Überdruck erzeugt, der nach der Aufblähung des Behältnisses auch bewirkt, daß sich der Mantel dichtend gegen die die Aufnahme und die Durchführungsöffnung begrenzenden Wände anlegt. Der Überdruck im Behältnis kann durch ein dem Behältnis, gesteuert durch Brand- oder Rauchmelder, zugeführtes Druckgas oder, gleichsam selbsttätig, dadurch erzeugt werden, daß in der Hitze des Brandfalls das im Behältnis enthaltene Brandschutzmittel ein Treibgas abspaltet. In beiden Fällen kann das Gas eine eigene Brandschutz-Löschwirkung entfalten, wenn es beispielsweise aus Stickstoff, Kohlendioxyd oder Wasserdampf besteht. Da die dichtende Anlage des Mantels an den die Aufnahme und die Durchführungsöffnung begrenzenden Wänden im wesentlichen erst nach der Aufblähung des Behältnisses stattfindet, werden zwischen diesen Wänden und dem Behältnis Reibungserscheinungen, die das Aufblähen erschweren oder behindern könnten, vermieden.

In einer bevorzugten Ausführungsform ist die Aufnahme für das Behältnis oberhalb der Durchführungsöffnung angeordnet und das Behältnis mit seinem unteren Teil in senkrechter Richtung aus der Aufnahme nach unten in die Durchführungsöffnung verstellbar. Das hat zum Vorteil, daß die Schwerkraft im Sinne einer zusätzlichen Antriebskraft die Bewegung des Behältnisses unterstützen und das im Behältnis enthaltene Brandschutzmittel unter der Wirkung seines Gewichtes in die Durchführungsöffnung fallen kann, wenn sich das Behältnis entsprechend verstellt und zum Austritt des Brandschutzmittels geöffnet hat. Der Mantel ist vorzugsweise ein flexibler Faltenbalg, der mit seinem oberen Rand fest an die die Aufnahme nach oben begrenzende Decke angeschlossen ist und am unteren Rand einen das Behältnis zur Durchführungsöffnung hin begrenzenden Boden trägt. Zweckmäßigerweise besteht der Boden des Behältnisses aus einer flexiblen Matte, die sich beim Aufblähen des Behältnisses den Konturen der in der Durchführungsöffnung liegenden Leitungen anschmiegen kann.

Im Hinblick auf die Erzeugung des Überdrucks im Behältnis empfiehlt es sich, daß im Behältnis eine Gaszuführungsleitung mündet, daß der Mantel gasdicht ist, und daß die Matte eine den Gasdurchtritt ermöglichende Porosität aufweist. Die Porosität soll dabei so beschaffen sein, daß sich im Behältnis zwar der zu seinem Aufblähen und seiner dichtenden Anlage erforderliche Überdruck aufbauen, dennoch aber durch die Matte auch ein genügend großer Gasfluß austreten kann, der zwischen den Leitungen der Durchführungsöffnung nach außen strömt und dadurch eine Rauchgassperre bldet, so daß schon vor der Volumenvergrößerung des Brandschutzmittels Rauchgase nicht in und durch die Durchführungsöffnung hindurch gelangen können.

Zweckmäßigerweise besteht der das Behältnis zur Durchführungsöffnung hin begrenzende Boden aus einem im Brandfall verbrennenden oder sich zersetzenden Werkstoff, wobei die Verbrennung oder Zersetzung bei niedrigerer Temperatur als die Volumenvergrößerung des Brandschutzmittels erfolgt. Das ist mit dem Vorteil verbunden, daß das im Behältnis enthaltene Brandschutzmittel bei schütt- oder rieselfähiger Beschaffenheit noch vor seiner Volumenvergrößerung in alle Zwischenräume zwischen den Leitungen selbst, zwischen diesen und einer sie etwa tragenden Leitungspritsche, sowie zwischen der Leitungspritsche und den Wänden der Durchführungsöffnung gelangen und diese Zwischenräume ausfüllen und dichten kann.

Weiter empfiehlt es sich, an den Stirnwänden Schottwände anzuordnen, die im Brandfall in die Durchführungsöffnung verstellbar sind und die Durchführungsöffnung auf beiden Wandseiten begrenzen. Diese Schottwände dienen nicht nur zusätzlichem Brandschutz, sondern ebenfalls als Anlage für den Mantel und verhindern, daß sich der Mantel aus der Durchführungsöffnung in Leitungslängsrichtung auf beiden Wandseiten nach außen ausdehnen kann. Zweckmäßigerweise tragen die Schottwände an ihrem den Leitungen zugewandten Rand auf und zwischen die Leitungen fallende Fransen, was zur Rauchgasdichtigkeit beiträgt. Zumindest die Fransen bestehen aus einem die Wärme gut leitenden Werkstoff, insbes. aus Kupfer, was eine gute Flammschutzwirkung ergibt. Im einzelnen empfiehlt es sich, die Anordnung so zu treffen, daß die Schottwände als an den Stirnwänden angelenkte Klappen ausgebildet sind, die in einer in die Durchführungsöffnung hinein gegen den Boden des Behältnisses geschwenkten und ihn abstützenden Lage gehalten und erst im Brandfall in ihre die Durchführungsöffnung begrenzende Stellung verschwenkbar sind, in der sie gegen den Druck des sich ihnen anlegenden Mantels arretiert sind. Die Klappen können dann in der hochgeklappten Stellung das Behältnis in der Aufnahme festhalten, werden im Brandfall aber von dem sich aufblähenden Behältnis abwärts gedrückt und in die die Durchführungsöffnung schließende Stellung verschwenkt, so daß es für die Klappen keiner eigenen gesteuerten Stellantriebe bedarf.

Um sicher zu stellen, daß das im Behältnis enthaltene Brandschutzmittel den Aufbau des Innendrucks und die Aufblähung mechanisch nicht behindern kann, ist das Brandschutzmittel zweckmäßigerweise in mindestens einen Beutel aus einem im Brandfall verbrennenden oder sich zersetzenden Werkstoff eingeschlossen und der Beutel an der Decke der Aufnahme aufgehängt. Der Werkstoff verbrennt oder zersetzt sich erst nach dem Aufblähen des Behältnisses, so daß während des Aufblähens der Mantel auf der Innenseite des Behältnisses im wesentlichen freiliegt und dem das Behältnis aufblähenden Innendruck frei ausgesetzt.

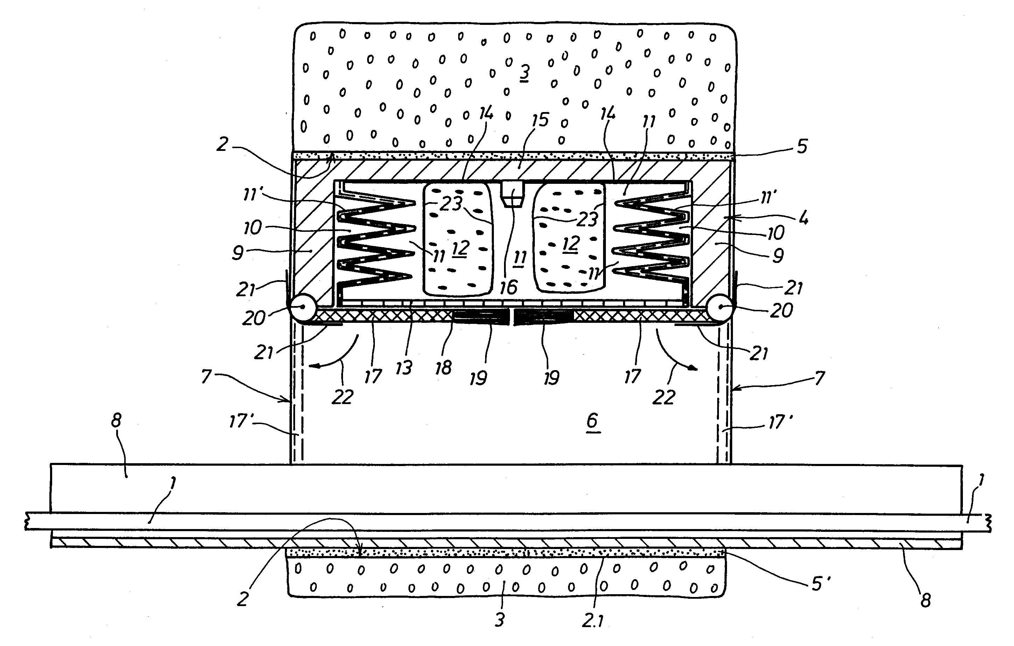

Im folgenden wird die Erfindung anhand eines in der Zeichnung dargestellten Ausführungsbeispiels näher erläutert. Die einzige Figur zeigt eine Abschottungsvorrichtung in einem senkrechten Schnitt in Leitungslängsrichtung.

Die in der Zeichnung dargestellte Vorrichtung dient zur Brandabschottung einer Wandöffnung 2 für die Durchführung von Leitungen, wie elektrische Kabel, Rohre oder dergl., durch eine Wand 3. Von diesen Leitungen ist in der Zeichnung der Einfachheit wegen nur eine Leitung 1 dargestellt. Die Vorrichtung umfaßt einen gegen die Wand 3 mittels Matten 5 aus Brandschutz-Schaumstoff abgedichteten, in der Wandöffnung 2 angeordneten, aus unbrennbarem, wärmeeständigen Material, beispielsweise Calzium-Silikat-Platten, bestehenden Schottkasten 4, der über Blöcke 6 aus beispielsweise verdichteter Steinwolle gegen die Unterseite 2.1 der Wandöffnung 2 abgestützt ist. Die Blöcke 6 liegen beidseits der die Leitungen 1 aufnehmenden Durchführungsöffnung 7 an den Seitenflächen der Wandöffnung 2. Die Leitungen 1 selbst liegen auf einer die Durchführungsöffnung zwischen den Blöcken 6 durchsetzenden Leitungspritsche 8, die ebenfalls gegen die Wand 3 durch eine Matte 5' aus Brandschutz-Schaumstoff abgedichtet ist. Der Schottkasten 4 besitzt auf beiden Seiten der Wandöffnung 2 eine oberhalb der Durchführungsöffnung 7 angordnete und sie freilassende feststehende Stirnwand 9. Zwischen diesen Stirnwänden 9 bildet der Schottkasten 4 eine zur Durchführungsöffnung 7 nach unten hin offene Aufnahme 10. In dieser Aufnahme 10 ist ein Behältnis 11 angeordnet, das zumindest mit seinem unteren Teil in senkrechter Richtung beweglich und in die Durchführungsöffnung 7 hinein verstellbar ist. Das Behältnis 11 enthält ein Brandschutzmittel 12, das im wesentlichen aus einem Intumeszenzmaterial besteht, welches im Brandfall infolge der Wärmeeinwirkung sein Volumen stark vergrößert und dadurch die Durchführungsöffnung 7 und die Aufnahme 10 ausfüllt und verschließt, so daß die Brandausbreitung durch die Wandöffnung 2 hindurch verhindert wird. Die Wandung des Behältnisses 11 besteht aus einem schlaff verformbaren Mantel 11', der bei der Bewegung des Behältnisses 11 aus der Aufnahme 10 in die Durchführungsöffnung 7 sich in Bewegungsrichtung von oben nach unten und um den Verstellweg verlängert, bis der das Behältnis 11 nach unten begrenzende Behältnisboden 13 sich auf den Leitungen 1 in der Durchführungsöffnung 7 auflegt. Diese Bewegung des Behältnisses 11 erfolgt unter der Wirkung eines im Behältnis entstehenden Innendrucks, unter dessen Wirkung sich der Mantel 11' anschließend an die Bewegung in die Durchführungsöffnung 7auch den die Aufnahme 10 und die Durchführungsöffnung 7 begrenzenden Wänden innenseitig abdichtend anlegt. Der Mantel 11' ist ein flexibler Faltenbalg, der mit seinem oberen Rand 14 fest an die die Aufnahme 10 nach oben begrenzende Decke 15 des Schottkastens 4 angeschlossen ist und am unteren Rand den das Behältnis 11 zur Durchführungsöffnung 7 hin begrenzenden Boden 13 trägt. Dieser Boden 13 besteht aus einer flexiblen Matte. Im Behältnis 11 mündet eine Gaszuführungsleitung 16. Der Mantel 11' ist gasdicht und besteht beispielsweise aus einem
unbrennbaren Gewebe, wie Glasfaser- oder SiO₂-Gewebe, das mit einem Dichtmittel, wie Latex oder Acryl-Binder gasdicht ausgerüstet ist. Der Boden 13 besitzt eine den Gasdurchtritt ermöglichende Porosität und besteht dazu aus einem Bürsten-, Sieb- oder Netzgewebe. Das durch die Gaszuführungsleitung 16, gesteuert durch Brand- oder Rauchgasmelder, in das Behältnis 11 einströmende Druckgas läßt darin einen Überdruck entstehen, der das Behältnis 11 unter entsprechender Streckung des flexiblen Mantels 11' soweit dehnt, daß es sich in die Durchführungsöffnung 7 hinein bewegt und diese bis zur Anlage des Bodens 13 an den Leitungen 1 verschließt. Unter der Wirkung des Innendrucks legt sich der Mantel 11' innenseitig an die die Durchführungsöffnung 7 und die Aufnahme 10 begrenzenden Wände, so daß der Mantel 11' einen dichten Verschluß der Durchführungsöffnung 7 und der Aufnahme 10 und im Ergebnis der Wandöffnung 2 insgesamt bildet. Gleichzeitig kann durch den Boden 13 ein Gasfluß austreten, der in den Zwischenräumen zwischen den Leitungen'1 in der Durchführungsöffnung 7 auf beiden Wandseiten nach außen strömt und dadurch eine Rauchgassperre bewirkt. Der das Behältnis 11 nach unten begrenzende Boden 13 besteht aus einem im Brandfall verbrennenden oder sich zersetzenden Werkstoff, wobei die Materialwahl so getroffen ist, daß die Verbrennung oder Zersetzung bei niedrigerer Temperatur als die Volumenvergrößerung des Brandschutzmittels 12 erfolgt, so daß das Brandschutzmittel bei schütt- oder rieselfähiger Beschaffenheit noch vor seiner Volumenvergrößerung freigesetzt und zwischen die Leitungen 1 selbst und zwischen die Leitungen 1 und die Leitungspritsche 8 gelangen kann. Die Menge des Intumeszenzmaterials 12 ist so groß, daß es nach erfolgter Volumenvergrößerung sowohl die Aufnahme 10 als auch die Durchführungsöffnung 7 ausfüllt.

An den Stirnwänden 9 sind Schottwände 17 angeordnet, die im Brandfall in die Durchführungsöffnung 7 verstellbar sind und die Durchführungsöffnung 7 auf beiden Wandseiten begrenzen. Diese Schottwände 17 bestehen aus einem möglichst gasdichten und dazu gegebenenfalls entsprechend beschichteten Kupferdrahtgewebe, das aufgrund seiner hohen Wärmeleitfähigkeit einen guten Flammschutz bildet. An ihren den Leitungen 1 zugewandten Rändern 18 tragen die Schottwände ebenfalls aus Kupferdraht bestehende Fransen 19, die auf und zwischen die Leitungen 1 fallen und die Leitungszwischenräume zusätzlich abdichten, wenn die Schottwände 17 in ihre die Durchführungsöffnung 7 begrenzende Stellung bewegt werden. Für diese Bewegung sind die Schottwände 17 im Ausführungsbeispiel als an den Stirnwänden 9 mit Gelenken 20 angeschlossene Klappen ausgebildet. Durch in der Zeichnung lediglich schematisch angedeutete Federn 21 oder andere geeignete Halteeinrichtungen sind die Schottwände 17 in einer in die Durchführungsöffnung 7 hinein und aufwärts gegen den Boden 13 des Behältnisses 11 geschwenkten und ihn abstützenden Lage gehalten. Erst im Brandfall erfolgt die Verstellung der Schottwände 17 in Richtung der Pfeile 22 die die Durchführungsöffnung 7 begrenzende, in der Zeichnung bei 17' gestrichelt angedeutete Stellung, in der die Schottwände 17 gegen den Druck des sich ihnen anlegenden Mantels 11' arretiert sind, so daß sich der Mantel 11' nicht nach außen in Leitungslängsrichtung aus der Durchführungsöffnung 7 hinaus ausdehnen kann. Das Brandschutzmittel 12 ist in Beuteln 23 aus einem im Brandfall verbrennenden oder sich zersetzenden Werkstoff, beispielsweise aus einer Kunststoffolie, eingeschlossen. Die Beutel 23 sind an der Decke 15 der Aufnahme 10 aufgehängt und halten daher die Innenseite des Mantels 11' frei vom Intumeszenzmaterial, so daß die Innenseite des Mantels 11' dem durch die Gaszuführungsleitung 16 zugeführten Druckgas frei ausgesetzt ist und das Brandschutzmittel 12 die Aufblähung des Mantels 11' nicht behindern kann. Erst wenn der Mantel 11' voll entfaltet ist und den die Aufnahme 10 und die Durchführungsöffnung 7 begrenzenden Wänden dichtend anliegt, geben die Beutel 13 das Brandschutzmittel 12 frei, und zwar bei einer Temperatur, bei der noch keine nennenswerte Volumenvergrößerung des Brandschutzmittels erfolgt.

## Patentansprüche

1. Vorrichtung zur Brandabschottung einer Wandöffnung (2) für die Durchführung von Leitungen (1), wie elektrische Kabel, Rohre oder dergl., durch eine Wand (3), mit einem abgedichtet gegen die Wand (3) in der Wandöffnung (2) angeordneten, die Leitungen (1) in einer Durchführungsöffnung (7) aufnehmenden Schottkasten (4), der auf beiden Seiten der Wandöffnung (2) je eine feststehende, die Durchführungsöffnung (7) freilassende Stirnwand (9) aufweist und zwischen diesen Stirnwänden (9) eine zur Durchführungsöffnung (7) hin offene Aufnahme (10) für ein Behältnis (11) bildet, das ein Brandschutzmittel (12) enthält, das im Brandfall infolge der Wärmeeinwirkung sein Volumen vergrößert und dadurch die Durchführungsöffnung (7) ausfüllt und verschließt, dadurch gekennzeichnet, daß das Behältnis (11) beweglich und in die Durchführungsöffnung (7) hinein verstellbar ist, und daß die Wandung des Behältnisses (11) zumindest teilweise aus einem verformbaren Mantel (11') besteht, der bei der Bewegung des Behältnisses (11) aus der Aufnahme (10) in die Durchführungsöffnung (7) in Bewegungsrichtung und um den Verstellweg verlängerbar ist und sich unter der Wirkung eines im Behältnis (11) entstehenden Innendrucks den die Aufnahme (10) und die Durchführungsöffnung (7) begrenzenden Wänden innenseitig anlegt.

2. Vorrichtung nach Anspruch 1, dadurch gekennzeichnet, daß die Aufnahme (10) für das Behältnis (11) oberhalb der Durchführungsöffnung (7) angeordnet und das Behältnis (11) mit seinem unteren Teil in senkrechter Richtung aus der Aufnahme (10) nach unten in die Durchführungsöffnung (7) verstellbar ist.

3. Vorrichtung nach Anspruch 2, dadurch gekennzeichnet, daß der Mantel (11') ein flexibler Faltenbalg ist, der mit seinem oberen Rand (14) fest an die die Aufnahme (10) nach oben begrenzende Decke (15) angeschlossen ist und am unteren Rand einen das Behältnis (11) zur Durchführungsöffnung (7) hin begrenzenden Boden (13) trägt.

4. Vorrichtung nach Anspruch 2 oder 3, dadurch gekennzeichnet, daß der Boden (13) des Behältnisses (11) aus einer flexiblen Matte besteht.

5. Vorrichtung nach Anspruch 4, dadurch gekennzeichnet, daß im Behältnis (11) eine Gaszuführungsleitung (16) mündet, daß der Mantel (11') gasdicht ist, und daß die den Boden (13) bildende Matte eine den Gasdurchtritt ermöglichende Porosität aufweist.

6. Vorrichtung nach einem der Ansprüche 1 bis 5, dadurch gekennzeichnet, daß der das Behältnis (11) zur Durchführungsöffnung (7) hin begrenzende Boden (13) aus einem im Brandfall verbrennenden oder sich zersetzenden Werkstoff besteht, wobei die Verbrennung oder Zersetzung bei niedrigerer Temperatur als die Volumenvergrößerung des Brandschutzmittels (12) erfolgt.

7. Vorrichtung nach einem der Ansprüche 1 bis 6, dadurch gekennzeichnet, daß an den Stirnwänden (9) Schottwände (17) angeordnet sind, die im Brandfall in die Durchführungsöffnung (7) verstellbar sind und die Durchführungsöffnung auf beiden Wandseiten begrenzen.

8. Vorrichtung nach Anspruch 7, dadurch gekennzeichnet, daß die Schottwände (17) an ihrem den Leitungen (1) zugewandten Rand (18) auf und zwischen die Leitungen (1) fallende Fransen (19) tragen.

9. Vorrichtung nach Anspruch 8, dadurch gekennzeichnet, daß zumindest die Fransen (19) aus einem die Wärme gut leitenden Werkstoff, insbesondere aus Kupfer, bestehen.

10. Vorrichtung nach einem der Ansprüche 1 bis 9, dadurch gekennzeichnet, daß die Schottwände (17) als an den Stirnwänden (9) angelenkte Klappen ausgebildet sind, die in einer in die Durchführungsöffnung (7) hinein gegen den Boden (13) des Behältnisses (11) geschwenkten und ihn abstützenden Lage gehalten und erst im Brandfall in ihre die Durchführungsöffnung (7) auf beiden Wandseiten begrenzende Stellung verschwenkbar sind, in der sie gegen den Druck des sich ihnen anlegenden Mantels (11') arretiert sind.

11. Vorrichtung nach einem der Ansprüche 1 bis 10, dadurch gekennzeichnet, daß das Brandschutzmittel (12) in mindestens einen Beutel (23) aus einem im Brandfall verbrennenden oder sich zersetzenden Werkstoff eingeschlosen und der Beutel (23) an der Decke (15) der Aufnahme (10) aufgehängt ist.

## Claims

1. Device for anti-fire partitioning of a wall aperture (2) to give passage to conductors (1) such as electric cables, tubes or the like, through a wall (3), with a bulkhead box (4) which is provided in the wall aperture (2) in such a way as to be sealed off from the wall (3) and which accommodates the conductors (1) in a leading-in aperture (7) and which is provided on each side of the wall aperture (2) with a fixed end wall (9) leaving the leading-in aperture (7) free and which forms between these end walls (9) a receiver (10), open towards the leading-in aperture (7), for a container (11) in which an anti-fire agent is provided which in the event of fire increases in volume through the effect of the heat, thus filling and sealing up the leading-in aperture (7), characterized in that the container (11) is movable and can be placed in the leading-in aperture (7), and that the wall of the container (11) at least partly consists of a deformable material (11') which, on the movement of the container (11) from the receiver (10) into the leading-in aperture (7), is capable of lengthening in the direction of the movement and by the distance of the adjustment, and which through the effect of an internal pressure occurring in the container (11) comes to rest against the insides of the walls delimiting the receiver (10) and the leading-in aperture (7).

2. Device in accordance with Claim 1, characterized in that the receiver (10) for the container (11) is positioned above the leading-in aperture (7) and that the container (11), by its lower part, is movable vertically downwards from the receiver (10) into the leading-in aperture (7).

3. Device in accordance with Claim 2, characterized in that the casing (11') is a flexible bellows structure which by its upper edge (14) is rigidly connected to the cover (15) which delimits the receiver (10) at the top, while at its lower edge it bears a base (13) delimiting the container (11) in the direction of the leading-in aperture (7).

4. Device in accordance with Claim 2 or 3, characterized in that the base (13) of the container(11) consists of a flexible mat.

5. Device in accordance with Claim 4, characterized in that a gas supply pipe (16) leads into the container (11), that the casing (11') is gas-tight and that the porosity of the mat forming the base (13) is such as to enable the gas to pass through.

6. Device in accordance with any one of Claims 1-5, characterized in that the base (13) delimiting the container (11) towards the leading-in aperture (7) consists of a material which in the event of fire burns or decomposes, the combustion or decomposition taking place at a lower temperature that the increase occurring in volume of the anti-fire agent (12).

7. Device in accordance with any one of Claims 1-6, characterized in that bulkheads (17) are provided on the end walls (9), are movable into the leading-in aperture (7) in the event of fire and delimit the said leading-in aperture on both sides of the wall.

8. Device in accordance with Claim 7, characterized in that the bulkhead walls (17), on their edge (18) closer to the conductors (11), bear fringes (19) situated on and between the said conductors (11).

9. Device in accordance with Claim 8, characterized in that at least the fringes (19) consist or an adequately heat-conducting material, particularly copper.

10. Device in accordance with any one of Claims 1-9, characterized in that the bulkheads (17) are constructed as flaps which are flexibly connected to the end walls (9) and which are secured in a position in which they are pivoted into the leading-in aperture (7), against the base (13) of the container (11), and in which the said base is supported, and are only pivotable in the event of fire into their position which delimits the leading-in aperture (7) on both sides of the wall and in which they are locked against the pressure of the casing (11') coming to rest against them.

11. Device in accordance with any one of Claims 1-10, characterized in that the anti-fire agent (12) is enclosed in at least one bag (23) made of a material which burns or decomposes in the event of fire and that the bag (23) is suspended from the cover (15) of the receiver (10).

## Revendications

1. Dispositif coupe-feu d'une ouverture de paroi (2) pour la traversée de conduits (1), comme des câbles électriques, des tuyaux ou analogues, à travers une paroi (3), avec un caisson de cloisonnement (4) disposé dans l'ouverture de paroi (2), calfeutré de façon étanche contre la paroi (3) et recevant les conduits (1) dans une ouverture de traversée (7), ledit caisson de cloisonnement comportant des deux côtés de l'ouverture de paroi (2) une paroi d'extrémité fixe (9) laissant dégagée l'ouverture de traversée (7), et formant entre ces parois d'extrémité (9) un logement (10) ouvert en direction de l'ouverture de traversée (7) pour un récipient (11) contenant un produit coupe-feu (12) qui en cas d'incendie augmente son volume sous l'effet de la chaleur et ainsi remplit et obstrue l'ouverture de traversée (7), caractérisé en ce que le récipient (11) est mobile et extensible dans l'ouverture de traversée(7), et en ce que la paroi du récipient (11) est constituée au moins partiellement par une enveloppe (11') qui est apte à être allongée dans la direction du mouvement selon la course d'extension, lors du déplacement du récipient (11) hors du logement (10) dans l'ouverture de traversée (7), et qui s'applique à l'intérieur contre les parois délimitant l'ouverture de traversée(7) et le logement (10) sous l'effet d'une pression intérieure générée dans le récipient (11).

2. Dispositif selon la revendication 1, caractérisé en ce que le logement (10) pour le récipient (11) est disposé au-dessus de l'ouverture de traversée (7) et en ce que le logement (10) est extensible par sa partie inférieure vers le bas dans l'ouverture de traversée (7), selon une direction verticale.

3. Dispositif selon la revendication 2, caractérisé en ce que l'enveloppe (11') est constituée par un soufflet d'intercirculation, qui est relié solidairement par son bord supérieur (14) au plafond (15) délimitant le logement (10) vers le haut, et porte sur le bord inférieur un fond (13) délimitant le récipient (11) en direction de l'ouverture de traversée (7).

4. Dispositif selon la revendication 2 ou 3, caractérisé en ce que le fond (13) du récipient (11) est constitué par une natte flexible.

5. Dispositif selon la revendication 4, caractérisé en ce qu'une conduite d'amenée de gaz (16) débouche dans le récipient (11), en ce que l'enveloppe (11') est étanche au gaz, et en ce que la natte formant le fond présente une porosité permettant le passage de gaz.

6. Dispositif selon l'une des revendications 1 à 5, caractérisé en ce que le fond (13) délimitant le récipient (11) en direction de l'ouverture de traversée (7) consiste en un matériau qui brûle ou se décompose en cas d'incendie, la combustion ou la décomposition ayant lieu à une température inférieure à celle correspondant à l'augmentation de volume du moyen coupe-feu (12).

7. Dispositif selon l'une des revendications 1 à 6, caractérisé en ce que des parois de caisson (17) sont disposées sur les parois d'extrémité (9), ces parois de caisson (17) étant susceptibles de se mouvoir en cas d'incendie dans l'ouverture de traversée (7), et délimitant l'ouverture de traversée (7) des deux côtés des parois.

8. Dispositif selon la revendication 7, caractérisé en ce que les parois de caisson (17) portent sur leur bord (18) tourné vers les conduits (1), des franges (19) tombant sur et entre les conduits (1).

9. Dispositif selon la revendication 8, caractérisé en ce qu'au moins les franges (19) sont en un matériau bon conducteur de la chaleur, en particulier en cuivre.

10. Dispositif selon l'une des revendications 1 à 9, caractérisé en ce que les parois de caisson (17) sont réalisées sous la forme de trappes articulées sur les parois d'extrémité (9), qui sont maintenues dans une position inclinée dans l'ouverture de traversée (7) contre le fond du récipient (11) qu'elles soutiennent, et qui ne peuvent être rabattues qu'en cas d'incendie, dans leur position délimitant l'ouverture de traversée (7) sur les deux côtés de parois, position dans laquelle elles sont bloquées contre la pression de l'enveloppe (11') qui s'appuie contre elles.

11. Dispositif selon l'une des revendications 1 à 10, caractérisé en ce que le produit coupe-feu (12) est compris dans au moins un sachet (23) en un matériau qui brûle ou se décompose en cas d'incendie, et en ce que le sachet (23) est suspendu au plafond (15) du logement (10).
